# EUROPÄISCHE PATENTSCHRIFT

(11) **EP 0 915 729 B1**
(45) Veröffentlichungstag und Bekanntmachung des Hinweises auf die Patenterteilung: **04.06.2003**
(21) Anmeldenummer: 98909206.9
(22) Anmeldetag: 17.03.1998
(51) Int. Cl.: B01D 29/03, B29C 47/68

(54) **VORRICHTUNG ZUM FILTRIEREN EINES VERUNREINIGTEN FLUIDS**
DEVICE FOR FILTERING AN IMPURE FLUID
DISPOSITIF POUR LA FILTRATION D'UN FLUIDE CONTAMINE

(30) Priorität: 17.03.1997 AT 46597
(43) Veröffentlichungstag der Anmeldung: 19.05.1999
(73) Patentinhaber: LENZING AKTIENGESELLSCHAFT, 4860 Lenzing (AT); Kreyenborg Verwaltungen und Beteiligungen GmbH & Co. KG, 48157 Münster (DE)
(72) Erfinder: KALT, Wolfram, A-8280 Fürstenfeld (AT); SCHWENNINGER, Franz, A-7563 Königsdorf 255 (AT); LONGIN, Michael, A-4860 Lenzing (AT); STUDE, Rolf-Rüdiger, D-48157 Münster (DE); KREYENBORG, Jan-Udo, D-48145 Münster (DE)
(74) Vertreter: Schwarz, Albin, Dr.
(86) Internationale Anmeldenummer: AT9800068
(87) Internationale Veröffentlichungsnummer: WO98041305

(56) Entgegenhaltungen:
- EP-A- 0 372 203
- WO-A-98/22198
- DE-A- 3 013 038
- DE-A- 19 615 679

## Beschreibung

Die Erfindung betrifft eine Vorrichtung zum Filtrieren eines verunreinigten Fluids, insbesondere einer teilchenhältigen viskosen Spinnmasse.

Für die Zwecke der vorliegenden Beschreibung und der vorliegenden Patentansprüche werden die Bezeichnungen Fluid, viskose Masse bzw. Spinnmasse insbesondere für eine Lösung verwendet, welche Cellulose und ein wässeriges tertiäres Aminoxid enthält, und welche zu cellulosischen Formkörpern jeglicher Art, insbesondere Fasern und Folien, verarbeitet werden kann. Die Herstellung der Spinnmasse und ihre Verarbeitung wird im folgenden der Einfachheit halber allgemein als Aminoxidverfahren bezeichnet.

Tertiäre Aminoxide sind als alternative Lösungsmittel für Cellulose bekannt. Aus der US-PS 2,179,181 ist beispielsweise bekannt, daß tertiäre Aminoxide Cellulose ohne Derivatisierung zu lösen vermögen und daß aus diesen Lösungen durch Fällung cellulosische Formkörper, wie Fasern, gewonnen werden können. Aus der EP-A - 0 553 070 der Anmelderin sind weitere tertiäre Aminoxide bekannt. Andere Aminoxide sind z.B. in der EP-A - 0 553 070 und in der US- A - 4,196,282 beschrieben. Alle tertiären Aminoxide, die Cellulose zu lösen vermögen, sind gemeint, wenn nachfolgend der Einfachheit halber lediglich NMMO (= N-Methylmorpholin-N-oxid) angesprochen wird.

Tertiäre Aminoxide bieten als alternative Lösungsmittel insofern einen Vorteil, als die Cellulose im Gegensatz zum Viskoseverfahren vom NMMO nicht-derivatisierend gelöst wird, wodurch die Cellulose nicht chemisch regeneriert werden muß, das NMMO chemisch unverändert bleibt und beim Fällen in das Fällbad übergeht, aus diesem rückgewonnen und für eine erneute Lösungsbereitung wiederverwendet werden kann. Das NMMO-Verfahren eröffnet somit die Möglichkeit eines geschlossenen Lösungsmittelkreislaufes. Dazu kommt noch, daß NMMO eine äußerst geringe Toxizität aufweist.

Beim Auflösen von Cellulose in NMMO nimmt jedoch der Polymersationsgrad der Cellulose ab. Zusätzlich führt insbesondere die Anwesenheit von Metallionen (z.B. Fe³⁺) zu radikalisch initiierten Kettenspaltungen und damit zu einem deutlichen Abbau der Cellulose und des Lösungsmittels (Buijtenhuijs et al.: The Degradation and Stabilization of Cellulose Dissolved in N-Methylmorpholin-N-Oxide (NMMO), in "Das Papier", 40. Jahrgang, Heft 12, Seiten 615-619, 1986).

Auch Aminoxide weisen allgemein nur eine begrenzte Thermostabilität auf, die in Abhängigkeit von der Struktur variiert. Das Monohydrat von NMMO liegt unter Normalbedingungen als weißer kristalliner Feststoff vor, der bei 72°C schmilzt. Die Anhydroverbindung schmilzt hingegen erst bei 172°C. Beim Erhitzen des Monohydrates tritt ab 120/130°C eine starke Verfärbung auf. Ab 175°C wird eine exotherme Reaktion unter vollständiger Entwässerung der Schmelze und heftiger Gasentwicklung mit explosionshaftem Verlauf ausgelöst, wobei Temperaturen über 250°C erreicht werden.

Es ist bekannt, daß metallisches Eisen und Kupfer, sowie insbesondere deren Salze, die Zersetzungstemperaturen von NMMO beträchtlich herabsetzen, wobei gleichzeitig die jeweilige Zersetzungsgeschwindigkeit erhöht wird.

Im übrigen tritt zu den oben genannten Problemen noch ein weiteres: die thermische Instabilität der NMMO-Cellulose--Lösungen selbst. Darunter ist zu verstehen, daß in den Lösungen bei den erhöhten Temperaturen der Verarbeitung (etwa 110-120°C) unkontrollierbare Zersetzungsprozesse ausgelöst werden können, die unter Entwicklung von Gasen zu heftigen Verpuffungen, Bränden und sogar zu Explosionen führen können.

Im Zuge der großtechnischen Verarbeitung von Lösungen von Cellulose in einem wäßrigen Aminoxid zu Spinnmassen müssen diese Lösungen einer Filtration unterworfen werden, um sicherzustellen, daß teilchenförmige Verunreinigungen, wie z.B. ungelöste Zellstoffteilchen, nicht in die Spinnmaschine gelangen und die feinen Spinnlöcher verstopfen. Diese Filtrierung kann mit einer Vielzahl von Filtern vorgenommen werden, wobei sich insbesondere sogenannte Rückspülfilter, wie sie z.B. aus der EP-A - 0 250 695 oder der EP-A - 0 372 203 bekannt sind, als geeignet erwiesen haben.

Herkömmliche Filtriervorrichtungen besitzen im wesentlichen ein Gehäuse mit einem Zustrom- und einem Abstromkanal für das verunreinigte bzw. das filtrierte Fluid, eine Führung für einen Siebträgerkörper, einen Siebträgerkörper, welcher in der Führung des Gehäuses verschiebbar gelagert ist, und ein Sieb, welches sich im Siebträgerkörper befindet. Ist das Sieb verstopft, so muß es gewechselt bzw. gereinigt werden. Dazu wird der Siebträgerkörper in der Führung so verschoben, daß beispielsweise der Zustromkanal vom Siebträgerkörper verschlossen wird und jene Stelle des Siebträgerkörpers, welcher das Sieb aufweist, an eine der Reinigung zugängliche Stelle gelangt. Anschließend wird der Siebträgerkörper wieder in seine Ausgangsstellung zurückgeschoben.

Es sind auch komplexer aufgebaute Rückspülfilter oder Siebwechsler bekannt. Allen ist jedoch gemeinsam, daß sie die oben aufgezählten Vorrichtungsmerkmale aufweisen, wobei sich der Siebträgerkörper paßgenau, d.h. ohne Spiel, in der Führung befindet.

Es hat sich gezeigt, daß sich bei Verwendung derartiger Filtriervorrichtungen zur Filtration von Spinnmassen trotz der engen Paßform in der Führung ein dünner Film aus Spinnmasse auf dem Siebträgerkörper ausbildet, haften bleibt, sich mit der Zeit zersetzt und dabei in hohem Ausmaß korrosiv wird und den metallischen Siebträgerkörper bzw. die Führung chemisch angreift. Dabei reichert sich dieser Film mit Metallen an. Die bei Rückspülung des Filters bzw. bei Siebwechsel notwendige Verschiebung des Siebträgerkörpers bewirkt dann bei Vorhandensein solcher Abbaureste und Beläge einen Eintrag dieser gefährlichen Rückstände in die Spinnmasse. Dies ist sehr gefährlich, da, wie bereits oben erwähnt, auf diese Weise Exothermien in der Spinnmasse ausgelöst werden können.

Aus der EP-A - 0 652 098 ist ein Verfahren zur Filtration einer thermisch instabilen Polymerschmelze bekannt, wobei tote Zonen, an denen sich Polymerschmelzen ansammeln und zersetzen können, vermieden werden sollen. Dies wird bei einem Verfahren erreicht, bei dem die Polymerschmelze von unten in die von Wärmeträgerflüssigkeit umspülten Rohre eines Rohrbündelwärmetauschers gepumpt wird, wobei in jedes Wärmetauscherrohr eine Filterkerze unter Ausbildung eines äußeren Ringspaltes derart eingesetzt ist, daß der Hauptstrom der Polymerschmelze nach Durchtritt durch die Filterkerzen und ein Nebenstrom ohne Durchtritt durch die Filterkerzen oben aus den Wärmetauscherrohren austreten und anschließend vereinigt werden.

Technische Maßnahmen zur Vermeidung von Totzonen wurden z.B. in der WO-A-94/02408 beschrieben, wobei ein Abdichtprinzip zur Anwendung kommt, um das Eindringen von Spinnmasse zwischen bewegte Behälterteile zu verhindern.

Die vorliegende Erfindung stellt sich zur Aufgabe, eine Vorrichtung zum Filtrieren eines verunreinigten Fluids zu schaffen, welche Vorrichtung ein Gehäuse mit einem Zustromund einem Abstromkanal für das verunreinigte bzw. das filtrierte Fluid, welches Gehäuse eine Führung für einen Siebträgerkörper aufweist, einen Siebträgerkörper, welcher in der Führung des Gehäuses verschiebbar gelagert ist, und ein Sieb, welches sich im Siebträgerkörper befindet, besitzt, bei welcher eine Ausbildung der oben beschriebenen Filme bzw. Beläge verhindert wird.

Die erfindungsgemäße Vorrichtung zum Filtrieren eines verunreinigten Fluids besitzt ein Gehäuse mit einem Zustromund einem Abstromkanal für das verunreinigte bzw. das filtrierte Fluid, welches Gehäuse eine Führung für einen Siebträgerkörper aufweist, einen Siebträgerkörper, welcher in der Führung des Gehäuses verschiebbar gelagert ist, und ein Sieb, welches sich im Siebträgerkörper befindet, und ist dadurch gekennzeichnet, daß der Siebträgerkörper und die Führung derart gestaltet sind, daß ein Spalt zwischen der Führung und dem Siebträgerkörper gebildet wird, und daß zwischen der Führung und dem Siebträgerkörper zumindest ein Abstandhalter vorgesehen ist, der sicherstellt, daß sich der Spalt zwischen Führung und Siebträgerkörper während des Filtrierens an keiner Stelle schließt, sodaß während des Filtrierens ständig Fluid durch den Spalt ausströmen kann.

Die WO-A-98/22198 beschreibt eine Vorrichtung zum Filtrieren eines Fluids. Bei dieser Vorrichtung ist aber kein Abstandshalter zwischen der Führung für den Siebträgerkörper und dem Siebträgerkörper vorgesehen.

Die Erfindung beruht auf der Erkenntnis, daß die Probleme, welche eine degenerierte Celluloselösung, die sich als Belag auf dem Siebträgerkörper absetzt, hervorruft, nicht dadurch gelöst werden können, daß über eine weitere Erhöhung der Paßgenauigkeit zwischen Siebträgerkörper und Führung versucht wird, zu verhindern, daß sich ein Belag ausbilden kann. Es ist also nicht zielführend, die Filtriervorrichtung so gut wie möglich abzudichten, wie dies im Stand der Technik angestrebt wird, sondern daß geradezu im Gegenteil ein Spalt vorgesehen werden soll, aus dem ein kleiner Teil der verarbeiteten Celluloselösung gezielt austreten kann. Es ist bei gewissen Bauteilen, z.B. bei einem Filter, oftmals gar nicht möglich, eine durchgehende Abdichtung massedurchströmter Teile zu bewirken. Zur Lösung dieses Problems ist auch die Reduzierung des Durchmessers des Siebträgerkörpers nicht zielführend, da dieser vom Druck der anströmenden Masse bei der abströmseitigen Wand an das Gehäuse angepreßt wird und sich somit wiederum ein dünner Film aus Spinnmasse auf dem Siebträgerkörper ausbilden kann. Es soll vielmehr ein Spalt vorgesehen werden, der sich während des Filtrierens an keiner Stelle schließt, sodaß während des Filtrierens ständig Fluid aus dem Spalt austreten kann. Mit Abstandhaltern soll ferner sichergestellt werden, daß sich der Spalt während des Betriebs des Filters nicht schließt. Auf diese Weise kann sich keine Spinnmasse am Siebträgerkörper als Belag ansammeln, und die Oberflächen des Siebträgerkörpers und der Führung bleiben ständig umspült und daher blank.

Die Größe des Spaltes wird zweckmäßigerweise so gewählt, daß die austretende, bereits in gewissem Ausmaß degenerierte Celluloselösung gemäß dem unten beschriebenen Thermostabilitätstest in Mischung mit Celluloselösung, die durch die Filtriervorrichtung transportiert wird und intakt ist, eine Anstiegstemperatur aufweist, die um maximal 10°C, insbesondere maximal 5°C, unter der Anstiegstemperatur der transportierten Celluloselösung liegt.

Es hat sich gezeigt, daß die Thermostabilität der Celluloselösung umso mehr abnimmt, je länger sie braucht, durch den Spalt austreten zu können. Eine Methode zur Prüfung der Thermostabilität ist unten angegeben.

In einer zweckmäßigen Ausführungsform der erfindungsgemäßen Vorrichtung ist der Siebträgerkörper zylindrisch ausgebildet, und ist die Führung derart gestaltet, daß zwischen Siebträgerkörper und Führung ein Ringspalt gebildet wird.

Als Abstandhalter haben sich Leisten besonders bewährt. Diese Leisten können Unterbrechungen aufweisen und sind vorzugsweise am Siebträgerkörper angebracht. Es ist jedoch auch möglich, die Leisten an der Führung anzubringen.

Die Leisten sind im wesentlichen in Verschiebungsrichtung des Siebträgerkörpers ausgerichtet. Sie können aber auch auf andere Weise, z.B. spiralförmig um den Siebträgerkörper herum angebracht sein und auf diese Weise die Richtung, in welcher sich die Masse durch den Spalt bewegt, beeinflussen.

Es hat sich gezeigt, daß eine aus Sicht der Prozeßsicherheit akzeptable und wirtschaftliche Situation im Aminoxidverfahren dann gegeben ist, wenn in einem unten beschriebenen Versuch gezeigt werden kann, daß durch einen Zusatz von 1% (bezogen auf intakte Spinnmasse) einer austretenden Masse die Thermostabilität zu einer intakten Spinnmasse weniger als 10°C, bezogen auf den Wert der gleichen intakten Spinnmasse ohne Zusatz, herabgesetzt wird.

Unter dem Ausdruck "intakte Spinnmasse" wird jene Spinnmasse verstanden, die im Hauptstrom durch die Filtriervorrichtung transportiert wird.

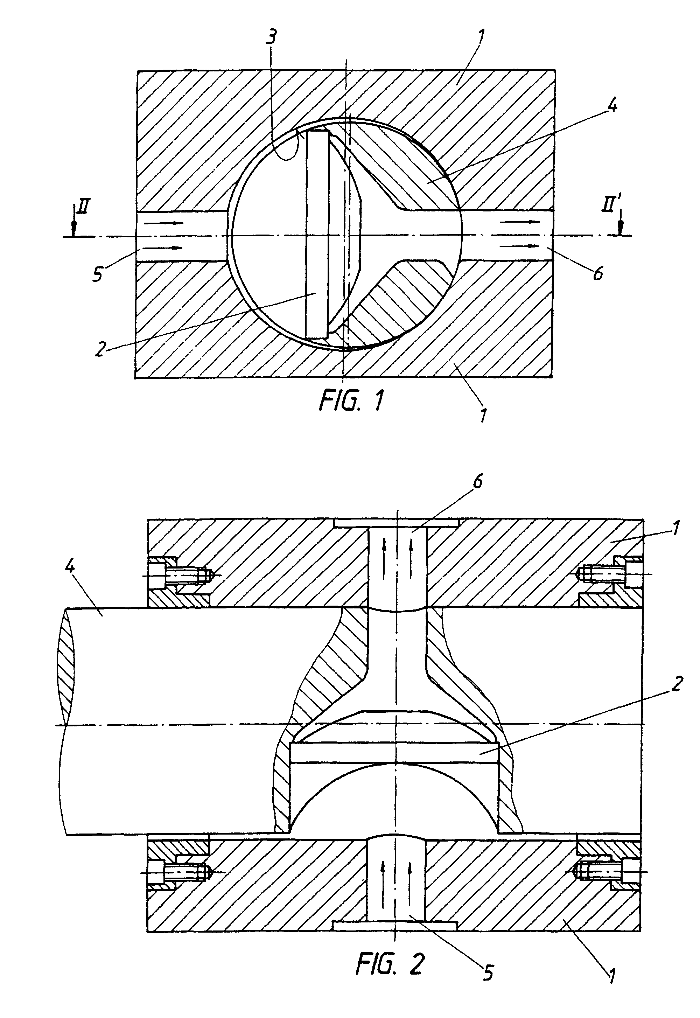

An Hand der Figuren 1 bis 5 wird die Erfindung noch näher erläutert.

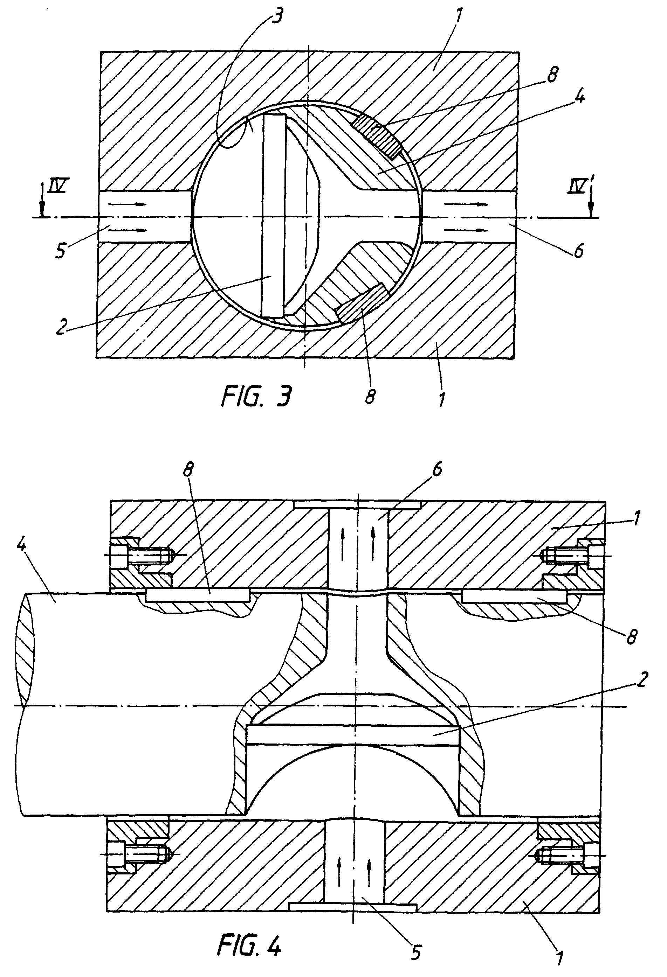

Die Figur 1 stellt schematisch einen Schnitt durch eine Filtriervorrichtung dar, sie zeigt allerdings nur jene Teile, die für das Verständnis der Erfindung von Bedeutung sind. Die Figur 2 stellt einen Schnitt entlang der Linie II-II' dar. In beiden Figuren stehen die gleichen Bezugszeichen für die gleichen Merkmale.

Die Bezugsziffer 1 bezeichnet das Gehäuse der Filtriervorrichtung, in welcher eine zylindrische Bohrung 3 vorgesehen ist, die als Führung für den ebenfalls zylindrischen Siebträgerkörper 4 dient, der in der Führung verschiebbar ist. Im Siebträgerkörper 4 ist ein kreisförmiges Sieb 2 vorgesehen. Die zu filtrierende Masse wird über den Zustromkanal 5 in die Vorrichtung gedrückt und gelangt durch das Filter 2 in den Abstromkanal 6. Die Strömungsrichtung ist jeweils mit Pfeilen dargestellt.

Der Siebträgerkörper 4 ist nicht genau in die zylindrische Bohrung 3, die als Führung dient, eingepaßt, sodaß ein Spalt entsteht, der sich naturgemäß beim Betrieb des Filters in Richtung der strömenden Masse schließt, Aus dem offenen Spalt kann Spinnmasse austreten, wodurch sich an jenem Teil der Oberfläche des Siebträgerkörpers 4, über den Spinnmasse strömen kann, kein Belag abscheiden kann.

Mit Abstandhaltern kann nun verhindert werden, daß sich der Spalt beim Filtrationsbetrieb an der der Strömung abgewandten Seite des Siebträgerkörpers schließt. Als Abstandhalter können beispielsweise Leisten vorgesehen sein, wie dies in den Figuren 3 und 4 gezeigt ist. Die Leisten sind mit dem Bezugszeichen 8 versehen. Die Leisten 8 sind bei der in den Figuren 3 und 4 gezeigten Ausführungsform an dem Siebträgerkörper 4 angebracht. Die übrigen Bezugszeichen bezeichnen die gleichen Vorrichtungsmerkmale wie in den Figuren 1 und 2.

Es hat sich gezeigt, daß sich bei dieser Vorrichtung während des Filtrationsbetriebes keine Spinnmasse an der Oberfläche des Siebträgerkörpers ablagert, sondern stets ein kleiner Teil der zu filtrierenden bzw. filtrierten Masse durch den Spalt zwischen der Führung 3 und dem Siebträgerkörper 4 nach außen gedrückt wird.

Es ist dem Fachmann klar, daß Leisten 8 über den gesamten Umfang des Siebträgerkörpers 4 angebracht sein können.

Die Leisten sollten aus in bezug auf die zu filtrierende Spinnmasse nicht-katalytischem Material und etwas weicher als der Gehäusewerkstoff sein. Bevorzugte Materialien für die Leisten sind z.B. Polyetherketon (PEEK) oder Polyaryletherketon (PAEK).

Nachfolgend wird beschrieben, auf welche Weise festgestellt werden kann, ob der Spalt für die Verwendung der erfindungsgemäßen Vorrichtung zur Filtration von viskosen Celluloselösungen breit genug ist, um die Gefahr von Exothermien zu bannen.

### Thermostabilitätstest

### 1. Intakte Spinnmasse (Kontrolle)

Zunächst wurde intakte Spinnmasse (Zusammensetzung: 15% Cellulose, 75% NMMO, 10% H₂O) im festen, auskristallisierten Zustand in einer Labormühle fein gemahlen.

Der Test wurde in einem Sikarex Ofen (Type: TSC 512, Hersteller: Systag) ausgeführt, wobei 11,5 g der oben bereiteten Probe in einem verschlossenen Druckgefäß mit Glaseinsatz erwärmt wurden. Als Temperaturprogramm wurde ein step-Experiment der Standard Software gefahren, bei dem zwischen zwei isothermen Stufen (1. Stufe 90°C, 2. Stufe 180°C) sehr langsam aufgewärmt wurde (Heizrate von 6°C/h). Dies ergab im interessierenden Bereich eine dynamische Fahrweise, die hervorragende Reproduzierbarkeit hinsichtlich der Exothermieereignisse lieferte. Während dieser Erwärmung wurde laufend die Temperaturdifferenz zwischen der Temperatur des Heizmantels (TM) und der Temperatur der Probe (TR) gemessen. Die erfaßten Daten wurden auf einem Computer verarbeitet.

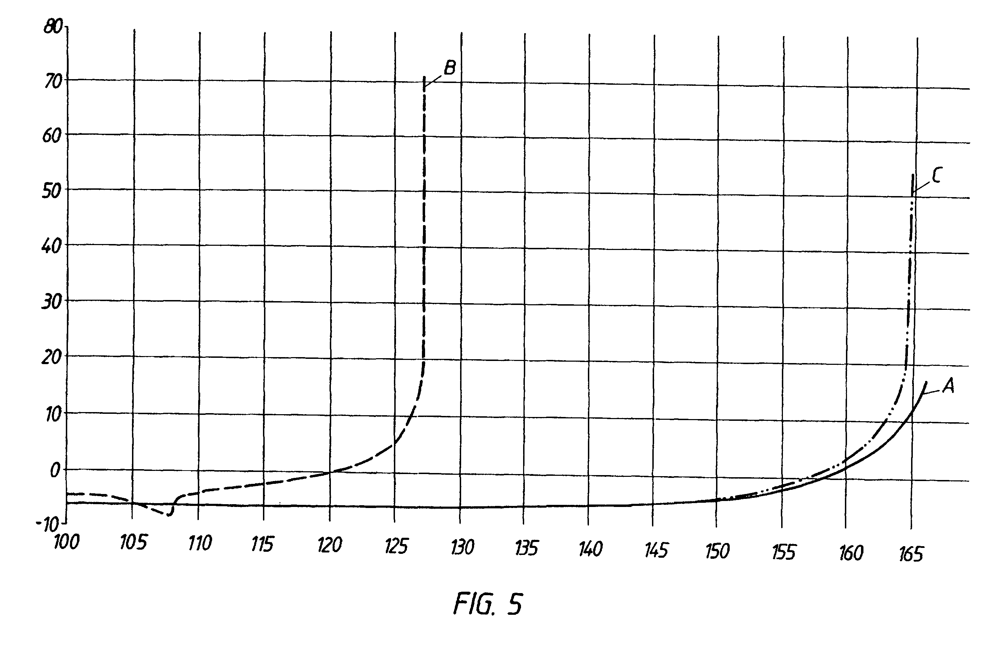

Ein repräsentatives Ergebnis ist in der Figur 5 als Kurve "A" (Kontrolle) dargestellt, wobei als Abszisse die Manteltemperatur (ab 100°C) und als Ordinate die Temperaturdifferenz (°C) zwischen der Probe und dem Mantel (TR-TM) aufgetragen ist. Der Kurve A ist zu entnehmen, daß bis zu einer Manteltemperatur von 150°C in der Probe offenbar praktisch keine exothermen Reaktionen ablaufen, da die Probentemperatur während des Aufheizens konstant um etwa 5° niedriger als die Manteltemperatur ist. Dies enspricht einem normalen Aufheizvorgang mit der oben angegebenen Geschwindigkeit.

Ab einer Manteltemperatur von etwa 150°C steigt die Kurve A immer steiler an, was bedeutet, daß die Temperatur der Probe schneller steigt als die Temperatur des Mantels. Dies ist auf exotherme Reaktionen in der Probe zurückzuführen. Bei einer Manteltemperatur von 165°C beträgt die Temperaturdifferenz bereits 10°C, was eine Probentemperatur von 175°C bedeutet.

### 2. Rückstand aus einem Rückspülfilter

Als nächstes wurde der obige Test mit einer innigen Mischung aus 11,5 g der oben genannten, fein gemahlenen Spinnmasse mit 0,115 g (= 1%) einer zu prüfenden Masse, die sich als Belag auf einem Kolben (Siebträger) eines herkömmlichen Rückspülfilters des Standes der Technik abgeschieden hatte, wiederholt. Das Ergebnis ist in der Figur 5 als Kurve "B" eingetragen.

Dieser Kurve ist zu entnehmen, daß exotherme Reaktionen in der untersuchten Masse bereits ab einer Temperatur von etwa 120°C auftreten, was anzeigt, daß die getestete Mischung thermisch viel weniger stabil ist, als die intakte Spinnmasse (Kontrolle Kurve "A").

### 3. Aus einer erfindungsgemäßen Vorrichtung austretende Masse

Schließlich wurde der unter Punkt 2 beschriebene Test mit einer Masse wiederholt, die aus einem Spalt eines Filters gemäß Figur 3 ausgetreten war, der zwischen Siebträgerkörper und Führung vorgesehen war. Das Ergebnis ist in der Figur 5 als Kurve "C" eingetragen.

Dieser Kurve ist zu entnehmen, daß die untersuchte Masse in hohem Ausmaß thermisch stabiler ist als der Belag, der sich im Stand der Technik bildet, oder Masse, die mit geringsten Anteilen mit diesem Belag versetzt wurde. Die untersuchte Masse ist sogar nur unwesentlich weniger thermisch stabil als die intakte Spinnmasse (Kontrolle Kurve "A").

### 4. Prüfung der Tauglichkeit eines Spaltes

Um einen Spalt, der in einer Filtriervorrichtung erfindungsgemäß vorgesehen wird, darauf zu testen, ob er im Sinne der Erfindung geeignet ist, Spinnmasse ausreichend schnell austreten zu lassen, wird zunächst die thermische Stabilität der intakten Spinnmasse (siehe oben Punkt 1) und dann die oben unter Punkt 3 beschriebene Mischung aus intakter Spinnmasse und 1 Massen% (bezogen auf die intakte Spinnmasse) Leckagemasse gemessen. Der Spalt gewährleistet im Sinne der vorliegenden Erfindung dann eine ausreichende Prozeßsicherheit, wenn sich die Thermostabilität der Mischung nur wenig von der Thermostabilität der intakten Spinnmasse unterscheidet. Als Maß dafür wird für die Zwecke der vorliegenden Beschreibung und Patentansprüche die sogenannte "Anstiegstemperatur" definiert. Unter "Anstiegstemperatur" wird jene Temperatur des Mantels (Programmtemperatur) verstanden, bei der die Temperatur der Meßprobe aufgrund exothermer Reaktionen um 10°C höher als die Temperatur des Heizmantels liegt.

Im Sinne der vorliegenden Beschreibung und Patentansprüche unterscheidet sich die Thermostabilität der Mischung dann nur wenig von der Thermostabilität der intakten Spinnmasse, wenn die Differenz der Anstiegstemperaturen von intakter Spinnmasse und Mischung maximal 10°C ist.

Zur Verdeutlichung wird dieses Meßprinzip an Hand der Figur 5 noch näher erläutert.

Zuerst wird mit intakter Spinnmasse gemäß obiger Methodik die Kurve A aufgenommen. Aus der Kurve A ist ersichtlich, daß die intakte Spinnmasse eine Anstiegstemperatur von etwa 165°C besitzt.

Dann wird die zu testende Mischung aus intakter Spinnmasse und ausgetretener Masse bereitet und diese getestet. Unter der Annahme, daß sich die Kurve C der Figur 5 ergibt, liegt die Anstiegstemperatur der homogenen Mischung bei etwa 163°C. Dies bedeutet, daß die Differenz der Anstiegstemperaturen 2°C (165-163) ist und daß die Öffnung, aus der die Leckagemasse austrat, im Sinne der vorliegenden Erfindung groß genug ist, da sich die Thermostabilität der Mischung von jener der intakten Spinnmasse nur wenig unterscheidet.

## Patentansprüche

1. Vorrichtung zum Filtrieren eines verunreinigten Fluids, welche Vorrichtung aufweist:
- ein Gehäuse (1) mit einem Zustrom- und einem Abstromkanal (5;6) für das verunreinigte bzw. das filtrierte Fluid, welches Gehäuse eine Führung (3) für einen Siebträgerkörper (4) aufweist;
- einen Siebträgerkörper, welcher in der Führung des Gehäuses verschiebbar gelagert ist; und
- ein Sieb (2), welches sich im Siebträgerkörper befindet,
**dadurch gekennzeichnet,**
- **daß** der Siebträgerkörper (4) und die Führung (3) derart gestaltet sind, daß ein Spalt zwischen der Führung (3) und dem Siebträgerkörper (4) gebildet wird, und
- **daß** zwischen der Führung (3) und dem Siebträgerkörper (4) zumindest ein Abstandhalter (8) vorgesehen ist, der sicherstellt, daß sich der Spalt zwischen Führung (3) und Siebträgerkörper (4) während des Filtrierens an keiner Stelle schließt, sodaß während des Filtrierens Fluid durch den Spalt ausströmen kann.

2. Vorrichtung nach Anspruch 1, **dadurch gekennzeichnet, daß** der Siebträgerkörper (4) zylindrisch ausgebildet ist, und daß die Führung (3) derart gestaltet ist, daß zwischen Siebträgerkörper (4) und Führung (3) ein Ringspalt gebildet wird.

3. Vorrichtung nach Anspruch 1 oder 2, **dadurch gekennzeichnet, daß** als Abstandhalter (8) Leisten vorgesehen sind.

4. Vorrichtung nach Anspruch 3, **dadurch gekennzeichnet, daß** die Leisten (8) Unterbrechungen aufweisen.

5. Vorrichtung nach einem der Ansprüche 3 oder 4, **dadurch gekennzeichnet, daß** die Leisten (8) am Siebträgerkörper (4) angebracht sind.

6. Vorrichtung nach einem der Ansprüche 3 bis 5, **dadurch gekennzeichnet, daß** die Leisten (8) im wesentlichen in Verschiebungsrichtung des Siebträgerkörpers (4) ausgerichtet sind.

## Claims

1. A device for filtering an impure fluid, which device comprises:
- a casing (1) comprising a feed channel and a discharge channel (5; 6) for the impure or filtered fluid, respectively, which casing is provided with a guide (3) for a screen-support body (4);
- a screen-support body arranged so as to be displaceable in the guide of the casing; and
- a screen (2) located in the screen-support body,
**characterized in that**
- the screen-support body (4) and the guide (3) are configured such that between the guide (3) and the screen-support body (4) a gap is formed, and
- that between the guide (3) and the screen-support body (4) at least one spacer (8) is provided, ensuring that the gap between the guide (3) and the screen-support body (4) does not close at any point during filtering so that fluid can escape through the gap during filtering.

2. A device according to claim 1, **characterized in that** the screen-support body (4) is shaped so as to be cylindrical and the guide (3) is configured such that between the screen-support body (4) and the guide (3) an annular gap is formed.

3. A device according to claim 1 or 2, **characterized in that**, as spacers (8), strips are provided.

4. A device according to claim 3, **characterized in that** the strips (8) have breaks.

5. A device according to any of claims 3 or 4, **characterized in that** the strips (8) are mounted on the screen-support body (4).

6. A device according to any of claims 3 to 5, **characterized in that** the strips (8) are substantially oriented in the direction of displacement of the screen-support body (4).

## Revendications

1. Dispositif de filtration d'un fluide contaminé, le dispostif présentant :
- un boîtier (1) avec un canal d'arrivée et un canal d'évacuation (5; 6) pour le fluide contaminé, d'une part, et filtré, d'autre part, le boîtier présentant un guidage (3) pour un corps porte-tamis (4) ;
- un corps porte-tamis, monté de façon déplaçable dans le guidage du boîtier ; et
- un tamis (2) se trouvant dans le corps porte-tamis,
**caractérisé en ce que**
- le corps support de tamis (4) et le guidage (3) sont réalisés de manière qu'un intervalle soit formé entre le guidage (3) et le corps porte-tamis (4), et
- entre le guidage (3) et le corps porte-tamis (4) est prévu au moins un support d'espacement (8), assurant que l'intervalle entre le guidage (3) et le corps porte-tamis (4) ne se ferme à aucun endroit pendant la filtration, de sorte que, pendant la filtration, du fluide puisse s'échapper en passant par l'intervalle.

2. Dispositif selon la revendication 1, **caractérisé en ce que** le corps support de tamis (4) est de forme cylindrique, et **en ce que** le guidage (3) est conformé de manière à ce qu'un intervalle annulaire soit formé entre le corps porte-tamis (4) et le guidage (3).

3. Dispositif selon la revendication 1 ou 2, **caractérisé en ce que** des bandes sont prévues en guise de support d'espacement (8).

4. Dispositif selon la revendication 3, **caractérisé en ce que** les bandes (8) présentent des interruptions.

5. Dispositif selon l'une des revendications 3 ou 4, **caractérisé en ce que** les bandes (8) sont montées sur le corps porte-tamis (4).

6. Dispositif selon l'une des revendications 3 à 5, **caractérisé en ce que** les bandes (8) sont orientées sensiblement dans la direction de déplacement du corps porte-tamis (4).
